# EUROPÄISCHE PATENTSCHRIFT

(11) **EP 4 028 199 B1**
(45) Veröffentlichungstag und Bekanntmachung des Hinweises auf die Patenterteilung: **28.01.2026**
(21) Anmeldenummer: 20792520.7
(22) Anmeldetag: 11.09.2020
(51) Int. Cl.: B23K 20/10, B06B 1/02, B06B 1/06, B23K 20/00, B23K 101/38, B23K 103/10, B23K 103/12

(54) **ULTRASCHALLWERKZEUG UND ULTRASCHALLVERBINDUNGSVORRICHTUNG HIERFÜR**
ULTRASONIC TOOL AND ULTRASONIC BONDING DEVICE FOR THIS
OUTIL À ULTRASONS ET DISPOSITIF DE LIAISON ULTRASONIQUE À CET EFFET

(30) Priorität: 11.09.2019 DE 102019124332; 11.09.2019 DE 102019124333; 11.09.2019 DE 102019124335; 11.09.2019 DE 102019124334
(43) Veröffentlichungstag der Anmeldung: 20.07.2022
(73) Patentinhaber: Hesse GmbH, 33104 Paderborn (DE)
(72) Erfinder: UNGER, Andreas, 33415 Verl (DE); BRÖKELMANN, Michael, 33129 Delbrück (DE); HUNSTIG, Matthias, 33104 Paderborn (DE); HESSE, Hans-Jürgen, 33106 Paderborn (DE)
(74) Vertreter: Wickord, Wiro
(86) Internationale Anmeldenummer: PCT/DE2020/100793
(87) Internationale Veröffentlichungsnummer: WO 2021/047737

(56) Entgegenhaltungen:
- EP-B1- 0 816 000
- JP-A- H0 474 445
- JP-A- H0 951 162
- JP-A- H05 109 808
- JP-A- H06 881
- JP-A- S6 344 970
- US-A- 5 194 710
- US-A- 5 431 324
- US-A1- 2010 025 453

## Beschreibung

Die Erfindung betrifft ein Ultraschallwerkzeug umfassend eine erste Stirnseite und eine der ersten Stirnseite gegenüberliegende zweite Stirnseite sowie eine die erste Stirnseite und die zweite Stirnseite verbindende Werkzeugmantelfläche, wobei das Ultraschallwerkzeug in eine Werkzeuglängsrichtung langgestreckt ausgebildet ist, wobei wenigstens die erste Stirnseite als eine Verbindungskontaktfläche ausgebildet ist, welche eingerichtet ist zum Andrücken des Ultraschallwerkzeugs an ein Verbindungsbauteil, und wobei das Ultraschallwerkzeug einen die Verbindungskontaktfläche aufweisenden Endbereich aufweist, der sich von der Verbindungskontaktfläche in die Werkzeuglängsrichtung über 15 mm, maximal jedoch ein Drittel einer in die Werkzeuglängsrichtung bestimmten Länge des Ultraschallwerkzeugs in Richtung der gegenüberliegenden Stirnseite erstreckt. Ferner betrifft die Erfindung eine Ultraschallverbindungsvorrichtung mit einem Ultraschallwerkzeug, einem Ultraschallgenerator, einem Transducer und einem Lasergenerator zum Bereitstellen eines Laserstrahls.

Ein gattungsgemäßes Ultraschallwerkzeug wird beispielsweise beim Ultraschallbonden beziehungsweise beim Ultraschallschweißen verwendet. Das Ultraschallwerkzeug wird über den Transducer, welcher insbesondere piezoelektrische Wandler als Schwingungserreger aufweist, zu Schwingungen, beispielsweise zu Torsionsschwingungen, Biegeschwingungen oder Längsschwingungen, angeregt. Die Schwingungserreger wiederum werden zur Anregung vom Ultraschallgenerator angesteuert.

Neben den klassischen Ultraschallwerkzeugen sind Ultraschallwerkzeuge für das laserunterstützte Ultraschallbonden beziehungsweise Ultraschallschweißen bekannt. Derartige Werkzeuge sind beispielsweise in der JP 5259220 A, der DE 10 2018 120 822 A1 und der DE 10 2017 129 546 A1 beschrieben. Die Ultraschallwerkzeuge sehen eine in die Werkzeuglängsrichtung erstreckte Längsausnehmung vor, welche sich von der zweiten Stirnseite in Richtung der Verbindungskontaktfläche erstreckt beziehungsweise in dieser mündet. Der mittels des Lasergenerators bereitgestellte Laserstrahl wird in die Längsausnehmung des Ultraschallwerkzeugs eingekoppelt und gelangt durch die Längsausnehmung bis zu dem die Verbindungskontaktfläche aufweisenden Endbereich beziehungsweise tritt an der Verbindungskontaktfläche aus dem Ultraschallwerkzeug aus und trifft auf das Verbindungsbauteil. Nachteilig ist hierbei jedoch, dass abhängig von den konstruktiven und räumlichen Gegebenheiten das Einkoppeln des Laserstrahls in die Längsausnehmung sowie ein Wechsel des Ultraschallwerkzeugs schwierig sein können. Darüber hinaus können beim Auftreffen des Laserstrahls auf das Verbindungsbauteil Dämpfe entstehen beziehungsweise Partikel sich lösen, so dass es zu Verunreinigungen am Verbindungsbauteil oder seiner Umgebung kommt.

Aus der JP S63 44970 A ist ein Ultraschalltransducer bekannt, welcher mantelseitig Ausnehmungen vorsieht, welche dazu dienen, den Transducer in Bezug auf seine Längs- und Torsionsschwingungen abzustimmen.

Die JP H04 74445 A beschreibt ebenfalls eine Bondvorrichtung mit einem Bondwerkzeug, welches im Bereich einer Werkzeugspitze mittels eines Laserstrahls erwärmt wird. Der Laserstrahl wird im Inneren des Bondwerkzeugs durch eine dort vorgesehene sacklochartige Längsausnehmung zu der Spitze des Bondwerkzeugs geführt.

Eine Vorrichtung und ein Verfahren zum Laserschweißen sind aus der US 5 194 710 A bekannt.

Die JP H05 109808 A sowie die JP H09 51162 A beschreiben eine Ultraschallverbindungsvorrichtung zum Ultraschallschweißen beziehungsweise Ultraschallbonden mit einem Bondwerkzeug, einem Ultraschallgenerator und einem Transducer. Der Ultraschallgenerator regt den Transducer zu Ultraschallschwingungen an. Der Transducer wiederum versetzt das Ultraschallwerkzeug in Ultraschallschwingungen.

Die US 5 431 324 A beschreibt eine Ultraschallbondvorrichtung, bei der Schwingungen eines Bondwerkzeugs der Bondvorrichtung mittels eines Laser-Dopplervibrometers erfasst werden.

Aus der US 2010/025453 A1 ist eine Bondvorrichtung mit einem Bondwerkzeug bekannt, welches zu Schwingungen angeregt wird. Die Vorrichtung sieht ein Interferometer vor, um die Schwingungen des Bondwerkzeugs berührungslos zu messen.

Aufgabe der vorliegenden Erfindung ist es, ein verbessertes Ultraschallwerkzeug für das laserunterstützte Ultraschallbonden und/oder -schweißen sowie eine Ultraschallverbindungsvorrichtung hiermit anzugeben.

Zur Lösung der Aufgabe ist die Erfindung in Verbindung mit dem Oberbegriff des Patentanspruchs 1 dadurch gekennzeichnet, dass in dem Endbereich an der Werkzeugmantelfläche eine taschenförmige beziehungsweise sacklochartige Ausnehmung mit einer Ausnehmungsmantelfläche und einem der Verbindungskontaktfläche zugewandten Ausnehmungsgrund ausgebildet ist.

Der besondere Vorteil der Erfindung besteht darin, dass durch das Vorsehen der taschenförmigen beziehungsweise sacklochartigen Ausnehmung an der Werkzeugmantelfläche der Laserstrahl von außen auf das Ultraschallwerkzeug und die Ausnehmung gerichtet werden kann. Die Positionierung des Lasergenerators beziehungsweise von Teilen desselben relativ zum Ultraschallwerkzeug wird hierdurch signifikant vereinfacht. Darüber hinaus ist die Ausnehmung unmittelbar in dem Endbereich mit der Verbindungskontaktfläche vorgesehen. Insofern wird das Ultraschallwerkzeug durch den Laserstrahl unmittelbar dort erwärmt, wo das Verbindungsbauteil an das Ultraschallwerkzeug angelegt wird.

Im Sinne der Erfindung ist die an der Werkzeugmantelfläche vorgesehene Ausnehmung taschenförmig beziehungsweise sacklochartig, wenn die Ausnehmung eine einzige Öffnung vorsieht und diese einzige Öffnung ausschließlich von der Werkzeugmantelfläche umgeben ist. Es ist insofern die Ausnehmung nicht bis in die Verbindungskontaktfläche beziehungsweise die zweite Stirnseite erstreckt. Die Verbindungskontaktfläche ist also derart geschlossen ausgebildet, dass der Laserstrahl nicht durch die Ausnehmung hindurch auf das Verbindungsbauteil trifft beziehungsweise an der Verbindungskontaktfläche austritt. Es erfolgt dabei eine mittelbare Zuführung thermischer Energie in die Verbindungszone durch das Erwärmen des Ultraschallwerkzeugs in dem Endbereich und den Wärmefluss von dem Ultraschallwerkzeug zu dem Verbindungsbauteil. Einer unzulässigen Erwärmung des Verbindungsbauteils, einer Beschädigung desselben beziehungsweise einer Verunreinigung der Verbindungsstelle und/oder von Teilen des Lasergenerators beziehungsweise der den Laserstrahl formenden und/oder führenden Optikkomponenten des Lasergenerators (Linse oder Lichtwellenleiter oder dergleichen) kann hierdurch wirksam vorgebeugt werden.

Zugleich reduziert sich durch das Vorsehen der taschenförmigen beziehungsweise sacklochartigen Ausnehmung das Risiko, dass der Laserstrahl unkontrolliert und insbesondere auf die Verbindungsbauteile oder in Richtung des Bedienpersonals reflektiert wird. Es wird hierdurch dem Risiko einer Beschädigung der Verbindungsbauteile oder einer Gefahr für die Gesundheit des Bedienpersonals entgegengewirkt. Darüber hinaus ist weiterhin gewährleistet, dass das Ultraschallwerkzeug schnell aufgeheizt werden kann, indem der Laserstrahl benachbart zu der Verbindungskontaktfläche in dem Endbereich auf das Ultraschallwerkzeug trifft und insofern die vom Laserstrahl bereitgestellte Energie nah an der Verbindungs- beziehungsweise Fügestelle in Wärme umgewandelt wird.

Im Sinne der Erfindung ist der Endbereich des Ultraschallwerkzeugs zum einen durch die Verbindungskontaktfläche definiert. Zum anderen liegt die Ausnehmung in dem Endbereich und der Endbereich weist ausgehend von der Verbindungskontaktfläche eine maximale Erstreckung von 15 mm in die Werkzeuglängsrichtung auf, wobei der Endbereich maximal ein Drittel einer Länge des Ultraschallwerkzeugs abdeckt. Bei sehr kurzen Ultraschallwerkzeugen, die beispielsweise beim Ultraschall-Ballbonden eingesetzt werden, kann der Endbereich kürzer sein als 15 mm. Bei Ultraschallwerkzeugen mit einer Länge von mehr als 45 mm ist der Endbereichs kürzer als ein Drittel der Länge des Ultraschallwerkzeugs.

Nach einer bevorzugten Ausführungsform der Erfindung verjüngt sich das Ultraschallwerkzeug in dem Endbereich. Beispielsweise verjüngt sich das Ultraschallwerkzeug keilförmig. Ein senkrecht zu der Werkzeuglängsrichtung bestimmter Querschnitt verringert sich dabei jedenfalls abschnittsweise. Bevorzugt reduzieren sich zudem die Außenabmessungen des Ultraschallwerkzeugs in Richtung der Verbindungskontaktfläche kontinuierlich.

Nach einer Weiterbildung der Erfindung erstreckt sich die Ausnehmung von der Werkzeugmantelfläche in Richtung der Verbindungskontaktfläche. Vorteilhaft kann hierdurch der Laserstrahl noch näher an die Verbindungskontaktfläche geführt und das Aufheizen beziehungsweise Erwärmen des Ultraschallwerkzeugs im Endbereich weiter beschleunigt werden. Darüber hinaus ergibt sich durch die entsprechende Gestaltung der Ausnehmung ein Vorteil bei der Anordnung beziehungsweise Positionierung des Lasergenerators beziehungsweise seiner Komponenten relativ zu dem Ultraschallwerkzeug. Der Laserstrahl kann nämlich insbesondere von schräg oben auf den Endbereich des Ultraschallwerkzeugs gerichtet sein.

Nach einer Weiterbildung der Erfindung ist eine zu der Werkzeugmantelfläche hin gebildete Begrenzungskontur der Ausnehmung beziehungsweise ihrer Ausnehmungsmantelfläche wenigstens abschnittsweise hyperbolisch, parabelartig, kreisbogenartig beziehungsweise elliptisch geformt. Die kreisbogenartige beziehungsweise elliptische Formgebung ergibt sich beispielsweise, wenn die Ausnehmung zylinderförmig oder kegelstumpfartig gebildet ist. Eine derartige Geometrie kann vergleichsweise einfach, präzise und schnell hergestellt werden mit der Folge, dass das als Verschleißteil ausgebildete Ultraschallwerkzeug kostengünstig bereitgestellt werden kann.

Nach einer Weiterbildung der Erfindung ist die Ausnehmung bezogen auf eine Längsmittelachse derselben wenigstens abschnittsweise symmetrisch ausgebildet und/oder weist wenigstens abschnittsweise eine in Bezug auf ihre Größe beziehungsweise Form gleiche Querschnittskontur auf. Vorteilhaft reduziert sich durch die Symmetrie, die gleiche Größe beziehungsweise die gleiche Querschnittsform der Fertigungsaufwand mit der Folge, dass das Ultraschallwerkzeug kostengünstig hergestellt werden kann.

Nach einer Weiterbildung der Erfindung schließen die Längsmittelachse der Ausnehmung und die Werkzeuglängsrichtung einen spitzen Winkel ein. Bevorzugt liegt der spitze Winkel im Bereich von 15 bis 50°. Vorteilhaft vereinfacht sich hierdurch die Zuführung des Laserstrahls. Insbesondere kann der Laserstrahl schräg von oben auf den Endbereich des Ultraschallwerkzeugs gerichtet werden. Konstruktiv vereinfacht sich so die Anordnung des Lasergenerators beziehungsweise die Integration einzelner Teile des Lasergenerators in einem verfahrbaren Positionierkopf einer Ultraschallverbindungsvorrichtung. Insbesondere können Linsen beziehungsweise Lichtwellenleiter zum Formen und Führen des Laserstrahls an dem Positionierkopf vorgesehen und mitbewegt werden, während andere Komponenten des Lasergenerators (zum Beispiel eine Laserquelle) ortsfest installiert sind.

Nach einer Weiterbildung der Erfindung weisen der Ausnehmungsgrund und/oder die Ausnehmungsmantelfläche der Ausnehmung eine den Laserstrahl diffus reflektierende Oberfläche auf. Vorteilhaft beugt die diffus reflektierende Oberfläche einer gerichteten Reflexion des Laserstrahls vor mit der Folge, dass einer Rückreflexion des Laserstrahls in Richtung der Laserquelle und/oder einer Beschädigung von Bauteilen entgegengewirkt ist. Überdies reduziert sich durch die diffuse Reflexion in unterschiedliche Richtungen die Strahlungsstärke beziehungsweise Intensität; dies ist von Vorteil, da Oberflächen oberhalb einer Material-, Oberflächen- beziehungsweise Wellenlängen-abhängigen Bestrahlungsstärke (Laser-Flächenleistungsdichte) sich verändern können beziehungsweise beschädigt werden. Solche Veränderungen haben Einfluss zum einen auf die Absorptionseigenschaften und damit letztlich auf das thermische Verhalten des Ultraschallwerkzeugs bei der Laserbestrahlung. Zum anderen entstehen bei zu großer Strahlungsintensität Dämpfe beziehungsweise Partikel lösen sich ab mit der Folge, dass diese sich an ungünstigen Stellen absetzen und/oder den Laserstrahl stören können.

In einer Weiterbildung ist der Ausnehmungsgrund senkrecht zu der Längsmittelachse der Ausnehmung orientiert. Vorteilhaft vereinfacht sich hierdurch die Herstellung der Ausnehmung. Beispielsweise kann die schräg zu der Werkzeuglängsrichtung orientierte Ausnehmung als Zylinder beziehungsweise Kegelstumpf eine senkrecht zu der Ausnehmungsmantelfläche orientierte Oberfläche im Bereich des Ausnehmungsgrunds aufweisen.

In einer Weiterbildung der Erfindung ist an dem Ausnehmungsgrund die Oberfläche derart geneigt zu der Längsmittelachse der Ausnehmung orientiert, dass ein in die Ausnehmung einfallender Laserstrahl an dem Ausnehmungsgrund in Richtung der Ausnehmungsmantelfläche reflektiert wird. Vorteilhaft verbessert sich hierdurch das Absorptionsvermögen, da ein reflektierter Teil des Laserstrahls nach dem Auftreffen auf den Ausnehmungsgrund erneut auf eine Begrenzungsfläche der Ausnehmung trifft. Zudem wird der Reflexion des Laserstrahls nach außen entgegengewirkt.

Nach einer Weiterbildung der Erfindung ist zwischen der Ausnehmungsmantelfläche und dem Ausnehmungsgrund eine Verrundung als Übergangsfläche ausgebildet. Vorteilhaft vereinfacht sich durch das Vorsehen der verrundeten Übergangsfläche die Herstellung der Ausnehmung. Überdies begünstigt die verrundete Übergangsfläche die ungerichtete Reflexion des Laserstrahls.

Nach einer Weiterbildung der Erfindung ist die Ausnehmung symmetrisch zu einer die Werkzeuglängsrichtung aufnehmenden Werkzeuglängsmittelebene orientiert. Besonders vorteilhaft ist die Werkzeuglängsmittelebene als eine Symmetrieebene des Ultraschallwerkzeugs ausgebildet. Vorteilhaft vereinfacht sich durch die Symmetrie die Herstellung des Ultraschallwerkzeugs sowie der Einbau desselben in die Ultraschallverbindungsvorrichtung.

Nach einer Weiterbildung der Erfindung ist das Ultraschallwerkzeug symmetrisch ausgebildet bezogen auf eine senkrecht zu der Werkzeuglängsrichtung orientierte Quermittelebene. Dabei ist in neben der ersten Stirnseite auch die zweite Stirnseite des Ultraschallwerkzeugs als Verbindungskontaktfläche ausgebildet. Vorteilhaft kann durch die Symmetrie zur Quermittelebene das Ultraschallwerkzeug als Wendewerkzeug realisiert sein. Es erhöht sich hierdurch die Standzeit des Ultraschallwerkzeugs.

Sofern das Ultraschallwerkzeug als Wendewerkzeug ausgebildet ist, sieht es an einander gegenüberliegenden Stirnseiten zwei Endbereiche mit jeweils wenigstens einer taschenförmigen beziehungsweise sacklochartigen Ausnehmung und einer Verbindungskontaktfläche vor. Die symmetrische Gestalt des Ultraschallwerkzeugs zur Quermittelebene sorgt dabei dafür, dass nach dem Wenden des Ultraschallwerkzeugs eine neue Ausrichtung des Lasers relativ zum Ultraschallwerkzeug nicht erforderlich ist. Es ist allein erforderlich, das Ultraschallwerkzeug nach dem Wenden in der definierten Einbauposition am Positionierkopf festzulegen.

Nach einer Weiterbildung der Erfindung ist die Ausnehmung des Ultraschallwerkzeugs durch Senkerodieren, durch ein additives Fertigungsverfahren, durch Laserstrukturierung beziehungsweise Laserablation, urformend und insbesondere in einem Sinterprozess beziehungsweise spanend hergestellt.

Nach einer Weiterbildung der Erfindung ist an der wenigstens einen Verbindungskontaktfläche eine Profilierung vorgesehen, mit der das Ultraschallwerkezug gegen das Verbindungsbauteil angedrückt wird. Insbesondere kann an der Verbindungskontaktfläche des Ultraschallwerkzeugs eine Anlagekontur für das Verbindungsbauteil vorgesehen sein. Beispielsweise kann als Anlagekontur eine V-förmige Querausnehmung für einen Bonddraht aus Aluminium oder Kupfer oder eine Kissen- und/oder Wabenstruktur zum Ultraschallbonden beziehungsweise Ultraschallschweißen von flachen Teilen wie Aluminiumbandmaterial oder Leadframes aus Kupferblech vorgesehen sein. Durch das Vorsehen der Profilierung beziehungsweise Anlagekontur ist die Ebenheit der Verbindungskontaktfläche wenigsten lokal unterbrochen und es kann eine kraft- und/oder formschlüssige Festlegung des Verbindungsbauteils am Ultraschallwerkzeug bewirkt werden.

Nach einer Weiterbildung der Erfindung besteht das Ultraschallwerkzeug mindestens in dem Endbereich aus einem Wolframcarbid- oder Titancarbid-basierten Hartmetall, aus einer Keramik, aus Stahl und/oder bevorzugt aus Wolframcarbid in einer Kobaltmatrix oder Bornitrid.

Zur Lösung der Aufgabe weist die Erfindung die Merkmale des Patentanspruchs 12 auf. Demzufolge umfasst eine Ultraschallverbindungsvorrichtung zum Ultraschallschweißen und/oder Ultraschallbonden
- ein erfindungsgemäßes Ultraschallwerkzeug mit einer an der Werkzeugmantelfläche gebildeten Ausnehmung,
- einen Ultraschallgenerator und einen Transducer, wobei der Ultraschallgenerator den Transducer derart zu Schwingungen anregt und der Transducer mit dem Ultraschallwerkzeug derart zusammenwirkt, dass das Ultraschallwerkzeug zu Ultraschallschwingungen und bevorzugt zu Ultraschallbiegeschwingungen angeregt ist,
- einen Lasergenerator zum Bereitstellen eines Laserstrahls,
wobei der Laserstrahl so auf die an dem Ultraschallwerkzeug gebildete Ausnehmung gerichtet ist, dass der Laserstrahl bevorzugt vollständig oder vorwiegend innerhalb der Ausnehmung auf das Ultraschallwerkzeug trifft und dass der Laserstrahl besonders bevorzugt auf den der Verbindungskontaktfläche des Ultraschallwerkzeugs zugewandten Ausnehmungsgrund der Ausnehmung trifft.

Der besondere Vorteil der Erfindung besteht darin, dass mittels der erfindungsgemäßen Ultraschallverbindungsvorrichtung das laserunterstützte Ultraschallbonden beziehungsweise Ultraschallschweißen effektiv und zugleich sicher durchgeführt werden kann. Durch das Vorsehen der Ausnehmung im Endbereich des Ultraschallwerkzeugs kann zum einen sehr gezielt Energie in die Nähe der Verbindungskontaktfläche eingebracht werden mit der Folge, dass das Ultraschallwerkzeug schnell erwärmt werden kann. Darüber hinaus wirkt die Ausnehmung einer ungerichteten Reflexion des Laserstrahls und somit einer Beschädigung der Verbindungsbauteile wirksam entgegen.

Nach einer bevorzugten Ausführungsform der Erfindung ist eine Einfallachse des Laserstrahls geneigt zu der Längsmittelachse der Ausnehmung orientiert. Vorteilhaft wird durch den schrägen Einfall des Laserstrahls in die Ausnehmung dem Risiko einer gerichteten Reflexion des Laserstrahls beispielsweise am Ausnehmungsgrund in einfacher Weise und zugleich sehr effektiv entgegenwirkt mit der Folge, dass der Laserstrahl insbesondere diffus und in der Ausnehmung mithin mehrfach reflektiert wird und dass so das Absorptionsvermögen verbessert wird. Gleichwohl kann die Ausnehmung einen senkrecht zu der Ausnehmungsmantelfläche und/oder der Längsmittelachse orientierten Ausnehmungsgrund vorsehen, so dass die Ausnehmung eine einfache und kostengünstig zu fertigende Geometrie aufweisen kann. Zudem kann einer Beschädigung einer Optikkomponenten des Lasergenerators entgegengewirkt werden. Darüber hinaus wird durch den schrägen Einfall des Laserstrahls in die Ausnehmung an der Werkzeugspitze ein großer Freiraum gebildet, so dass einer Kollision mit Komponenten des Verbindungsbauteils entgegengewirkt beziehungsweise eine Flexibilität beim Verfahren des Positionierkopfs verbessert ist.

Nach einer Weiterbildung der Erfindung trifft der Laserstrahl unter einem von 90° abweichenden Winkel auf den Ausnehmungsgrund. Vorteilhaft wird hierdurch einer gerichteten Reflexion des Laserstrahls insbesondere in Richtung der Einfallachse des Laserstrahls entgegengewirkt.

Nach einer Weiterbildung der Erfindung ist eine Wellenlänge des Laserstrahls so auf ein Material des Ultraschallwerkzeugs beziehungsweise seine Geometrie und Oberflächenbeschaffenheit im Bereich der Ausnehmung abgestimmt, dass ein Absorptionsgrad von mindestens 0,3 und bevorzugt von 0,5 oder mehr erreicht wird. Vorteilhaft kann hierdurch gewährleistet werden, dass das Ultraschallwerkzeug mittels des Laserstrahls sehr effektiv aufgewärmt werden kann. Darüber hinaus verbessert sich die Erwärmung mit jeder Reflexion, wenn der reflektierte Teil des Laserstrahls erneut innerhalb der Ausnehmung auf das Ultraschallwerkzeug trifft und demzufolge ein weiterer Teil des Laserstrahls absorbiert wird.

Nach einer Weiterbildung der Erfindung kann die Ultraschallverbindungsvorrichtung eine zur berührungslosen Temperaturmessung eingerichtete Messeinrichtung aufweisen, wobei die Messeinrichtung dem Ultraschallwerkzeug so zugeordnet ist, dass die Temperaturmessung im Endbereich des Ultraschallwerkzeugs und bevorzugt in der Ausnehmung erfolgt. Beispielsweise kann die Temperaturmessung mittels Pyrometrie erfolgen. Insbesondere kann die berührungslose Temperaturmessung in der Ausnehmung an einer diffus reflektierenden Oberfläche durchgeführt werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich und auch in beliebiger Kombination erfindungswesentlich sein. Erfindungsgemäß beschriebene Merkmale und Details des Ultraschallwerkzeugs gelten selbstverständlich auch im Zusammenhang mit der Ultraschallverbindungsvorrichtung und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Fig. 1: eine perspektivische Ansicht einer ersten Ausführungsform eines in eine Werkzeuglängsrichtung langerstreckt ausgebildeten Ultraschallwerkzeugs mit einer taschen- beziehungsweise sacklochartigen Ausnehmung in einem Endbereich desselben,
- Fig. 2: eine vergrößerte Frontseitenansicht des Endbereichs des Ultraschallwerkzeugs nach Fig. 1 mit der Ausnehmung,
- Fig. 3: eine Seitenschnittdarstellung des Endbereichs des Ultraschallwerkzeugs nach den Fig. 1 und 2,
- Fig. 4: eine perspektivische Darstellung des Endbereichs des Ultraschallwerkzeugs nach den Fig. 1 bis 3 mit einem auf die Ausnehmung gerichteten divergenten Laserstrahl,
- Fig. 5: eine Seitenansicht des Endbereichs des Ultraschallwerkzeugs und des auf die Ausnehmung gerichteten Laserstrahls (Fig. 4),
- Fig. 6: eine Gegenüberstellung von Erwärmungskurven für das Ultraschallwerkzeug nach den Fig. 1 bis 5 und eines konventionellen Ultraschallwerkzeugs ohne Ausnehmung,
- Fig. 7: eine perspektivische Ansicht des Endbereichs des Ultraschallwerkzeugs nach den Fig. 1 bis 5 mit einem auf die Ausnehmung gerichteten kollimierten Laserstrahl,
- Fig. 8: eine perspektivische Ansicht des Endbereichs des Ultraschallwerkzeugs nach den Fig. 1 bis 5 mit einem auf die Ausnehmung gerichteten fokussierten Laserstrahl,
- Fig. 9: eine Schnittdarstellung des Endbereichs des Ultraschallwerkzeugs nach den Fig. 1 bis 5 mit einer Darstellung einer in die Werkzeuglängsrichtung orientierten Werkzeuglängsmittelachse und einer Längsmittelachse der Ausnehmung,
- Fig. 10: die Schnittdarstellung nach Fig. 9, wobei zusätzlich eine Einfallachse des Laserstrahls wiedergegeben ist,
- Fig. 11: eine Schnittdarstellung des Endbereichs einer zweiten Ausführungsform des Ultraschallwerkzeugs mit einer stärker zu der Werkzeuglängsmittelachse geneigten zylindrischen Ausnehmung,
- Fig. 12: eine Schnittdarstellung des Endbereichs einer dritten Ausführungsform des Ultraschallwerkzeugs mit einer kegelstumpfförmigen Ausnehmung,
- Fig. 13: eine Schnittdarstellung des Endbereichs einer vierten Ausführungsform des Ultraschallwerkzeugs mit einer Ausnehmung, deren Ausnehmungsgrund senkrecht zu der Werkzeuglängsmittelachse orientiert ist,
- Fig. 14: eine Frontseitenansicht des Ultraschallwerkzeugs in einer fünften Ausführungsform,
- Fig. 15: eine vergrößerte Darstellung des Endbereichs des Ultraschallwerkzeugs nach Fig. 14,
- Fig. 16: eine Schnittdarstellung des Endbereichs des Ultraschallwerkzeugs nach den Fig. 14 und 15,
- Fig. 17: eine perspektivische Ansicht des Endbereichs des Ultraschallwerkzeugs nach den Fig. 14 bis 16 mit dem in die Ausnehmung einfallenden Laserstrahl,
- Fig. 18: eine Frontseitenansicht des Ultraschallwerkzeugs in einer sechsten Ausführungsform,
- Fig. 19: eine vergrößerte Darstellung des Endbereichs des Ultraschallwerkzeugs nach Fig. 18,
- Fig. 20: eine Schnittdarstellung des Endbereichs des Ultraschallwerkzeugs nach den Fig. 18 und 19,
- Fig. 21: eine perspektivische Darstellung des Endbereichs des Ultraschallwerkzeugs nach den Fig. 18 bis 20 mit dem in die Ausnehmung fallenden Laserstrahl,
- Fig. 22: eine perspektivische Darstellung der Endbereichs des Ultraschallwerkzeugs in einer siebten Ausführungsform,
- Fig. 23: eine perspektivische Darstellung des Endbereichs des Ultraschallwerkzeugs in einer achten Ausführungsform,
- Fig. 24: eine perspektivische Darstellung des Endbereichs des Ultraschallwerkzeugs in einer neunten Ausführungsform,
- Fig. 25: eine perspektivische Darstellung des Endbereichs des Ultraschallwerkzeugs in einer zehnten Ausführungsform,
- Fig. 26: eine perspektivische Darstellung einer elften Ausführungsform des Ultraschallwerkzeugs, wobei das Ultraschallwerkzeug symmetrisch bezüglich einer senkrecht zu der Werkzeuglängsrichtung orientierten Quermittelebene ausgebildet ist,
- Fig. 27: eine Seitenansicht des Ultraschallwerkzeugs nach Fig. 26,
- Fig. 28: eine Frontansicht des Werkzeugs nach den Fig. 26 und 27 und
- Fig. 29: eine vergrößerte Seitenansicht des Endbereichs des Ultraschallwerkzeugs nach den Fig. 26 bis 28 mit einem auf die Ausnehmung gerichteten Laserstrahl.

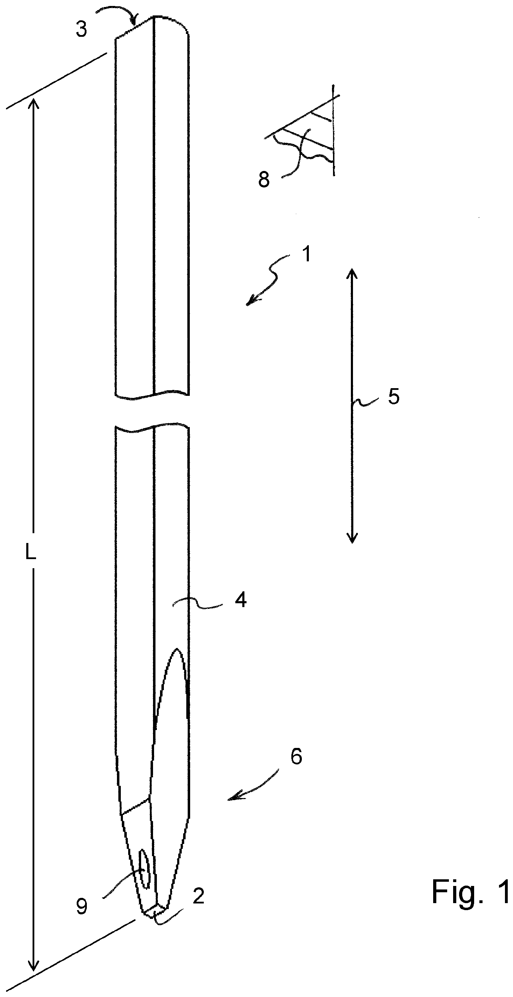

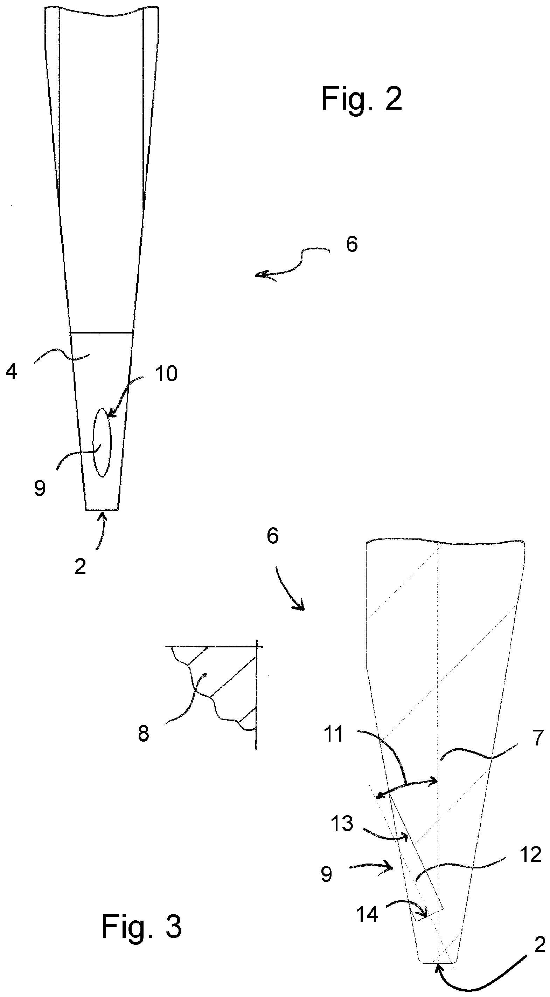

Die Fig. 1 bis 3 zeigen eine erste Ausführungsform eines erfindungsgemäßen Ultraschallwerkzeugs 1, welches eine als eine Verbindungskontaktfläche ausgebildete erste Stirnseite 2, eine der Verbindungskontaktfläche 2 gegenüberliegende zweite Verbindungsseite 3 und eine die Stirnseiten 2, 3 verbindende Werkzeugmantelfläche 4 umfasst. Das Ultraschallwerkzeug 1 ist in eine Werkzeuglängsrichtung 5 langerstreckt ausgebildet.

Die Verbindungskontaktfläche 2 ist eingerichtet zum Andrücken eines nicht dargestellten Verbindungsbauteils an das Ultraschallwerkzeug 1. Die Verbindungskontaktfläche 2 ist vorliegend eben beziehungsweise flach und ohne eine Anlagekontur realisiert. Das Ultraschallwerkzeug 1 dient insofern beispielsweise zum Ultraschallbonden beziehungsweise Ultraschallschweißen von flachen Teilen, insbesondere Aluminiumbandmaterial oder Leadframes aus Kupferblechen.

Das Ultraschallwerkzeug 1 ist in die Werkzeuglängsrichtung 5 langgestreckt ausgebildet. Es weist von der ersten Stirnseite 2 bis zu der zweiten Stirnseite 3 eine Länge L auf, die größer ist als 50 mm. Bezogen auf die Werkzeuglängsrichtung 5 bilden die unteren 15 mm des Ultraschallwerkzeugs 1 mit der Verbindungskontaktfläche 2 einen Endbereich 6 des Ultraschallwerkzeugs 1. In dem Endbereich 6 verjüngt sich das Ultraschallwerkzeug 1 bezogen auf einen senkrecht zu der Werkzeuglängsrichtung 5 orientierten Querschnitt in Richtung der Verbindungskontaktfläche 2. Bezogen auf die Außenkontur verläuft das Ultraschallwerkzeug 1 in dem Endbereich 6 keilförmig zur Verbindungskontaktfläche 2. Die Verbindungskontaktfläche 2 ist im Wesentlichen senkrecht zu der Werkzeuglängsrichtung 5 beziehungsweise einer in die Werkzeuglängsrichtung 5 orientierten Werkzeuglängsmittelachse 7 erstreckt. Zudem ist das Ultraschallwerkzeug 1 bezogen auf eine die Werkzeuglängsmittelachse 7 aufnehmende Längsmittelebene 8 symmetrisch ausgebildet.

Das Ultraschallwerkzeug 1 sieht in dem Endbereich 6 eine Ausnehmung 9 vor. Die Ausnehmung 9 weist eine ausschließlich in die Werkzeugmantelfläche 4 mündende, elliptisch ausgebildete Begrenzungskontur 10 zur Werkzeugmantelfläche 4 auf.

Die Ausnehmung 9 ist sackloch- beziehungsweise taschenartig ausgebildet. Bezogen auf eine unter einem spitzen Winkel 11 geneigt zu der Werkzeuglängsmittelachse 7 orientierte Längsmittelachse 12 der Ausnehmung 9 besitzt die Ausnehmung 9 eine kreisförmige Querschnittskontur konstanter Größe. Die Ausnehmung 9 weist insofern eine zylindrische Ausnehmungsmantelfläche 13 sowie einen ebenen, senkrecht zur Längsmittelachse 12 der Ausnehmung 9 orientierten Ausnehmungsgrund 14 aus. Der Ausnehmungsgrund 14 ist der Verbindungskontaktfläche 2 zugewandt.

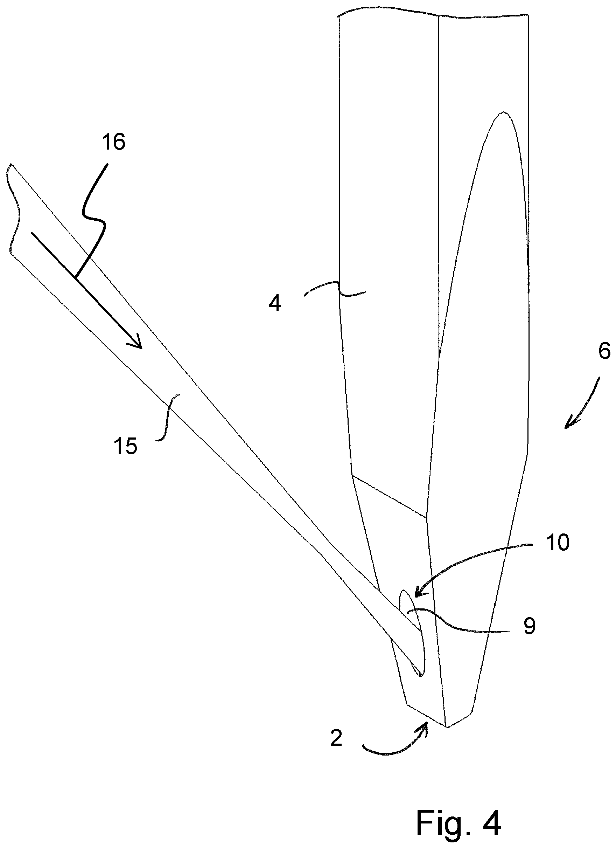

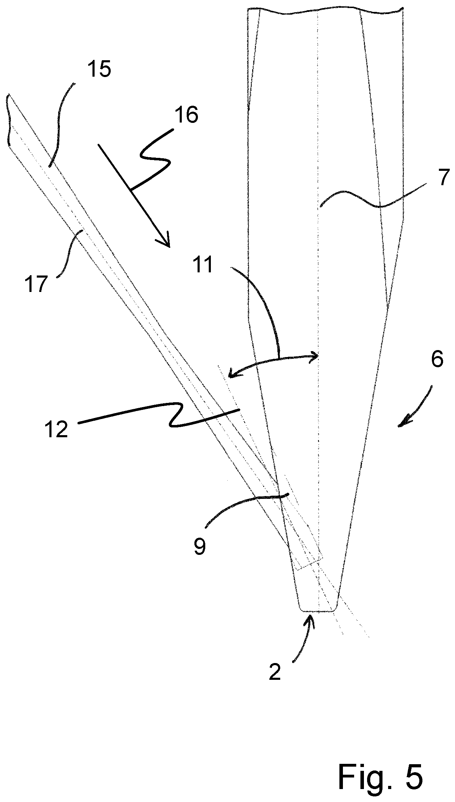

Fig. 4 zeigt eine perspektivische Ansicht des Endbereichs 6 und eines auf die Ausnehmung 9 gerichteten Laserstrahls 15. Der Laserstrahl 15 ist als divergent geformter Laserstrahl 15 ausgebildet mit einem Brennpunkt beziehungsweise Fokus, welcher bezogen auf eine Einfallrichtung 16 des Laserstrahls 15 vor dem Ultraschallwerkzeug 1 und außerhalb der Ausnehmung 9 liegt. Eine Einfallachse 17 des Laserstrahls 15 ist dabei geneigt zu der Längsmittelachse 12 der Ausnehmung 9 orientiert, vergleiche Fig. 5. Der Laserstrahl 15 tritt insofern unter einem schrägen, das heißt von 90° abweichenden Winkel auf den Ausnehmungsgrund 14. Ein reflektierter, das heißt nicht absorbierter Teil des Laserstrahls 15 wird von dem Ausnehmungsgrund 14 in Richtung der Ausnehmungsmantelfläche 13 reflektiert und dort erneut absorbiert beziehungsweise weiter reflektiert.

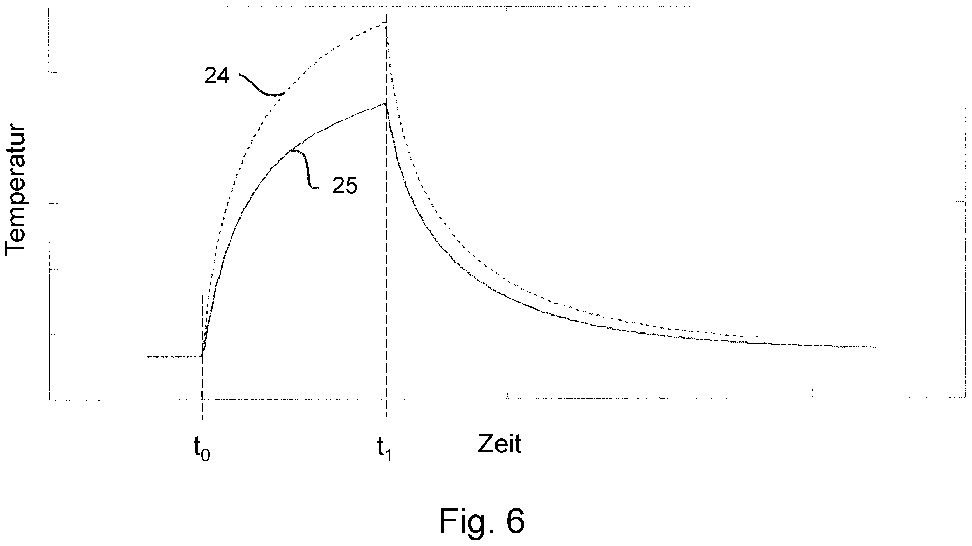

In Fig. 6 ist eine Temperatur des in den Fig. 1 bis 5 dargestellten Ultraschallwerkzeugs 1 in der Verbindungskontaktfläche 2 durch den gestrichelten Graphen 24 dargestellt. Gegenübergestellt ist im durch eine durchgezogene Linie dargestellten Graphen 25 der Temperaturverlauf eines Ultraschallwerkzeugs ohne Ausnehmung, welches ansonsten identische Abmessungen aufweist und aus einem identischen Material hergestellt ist. Beide Ultraschallwerkzeuge werden mit einem Laserstrahl gleicher Wellenlänge, gleicher Fokussierung und Positionierung mit einer gleichen, konstanten Leistung bestrahlt.

Zum Zeitpunkt t₀ wird der Laserstrahl 15 eingeschaltet und zum Zeitpunkt t₁ ausgeschaltet. Ausgehend von einer Umgebungstemperatur erwärmen sich die beiden Ultraschallwerkzeuge durch den Laserstrahl 15. Das erfindungsgemäße Ultraschallwerkzeug 1 wird jedoch schneller und auf eine höhere Temperatur erwärmt als das Vergleichswerkzeug. Es ist insofern nachgewiesen, dass das erfindungsgemäße Ultraschallwerkzeug 1 mehr Leistung absorbiert beziehungsweise weniger Leistung durch Reflexion des Laserstrahls 15 verloren geht.

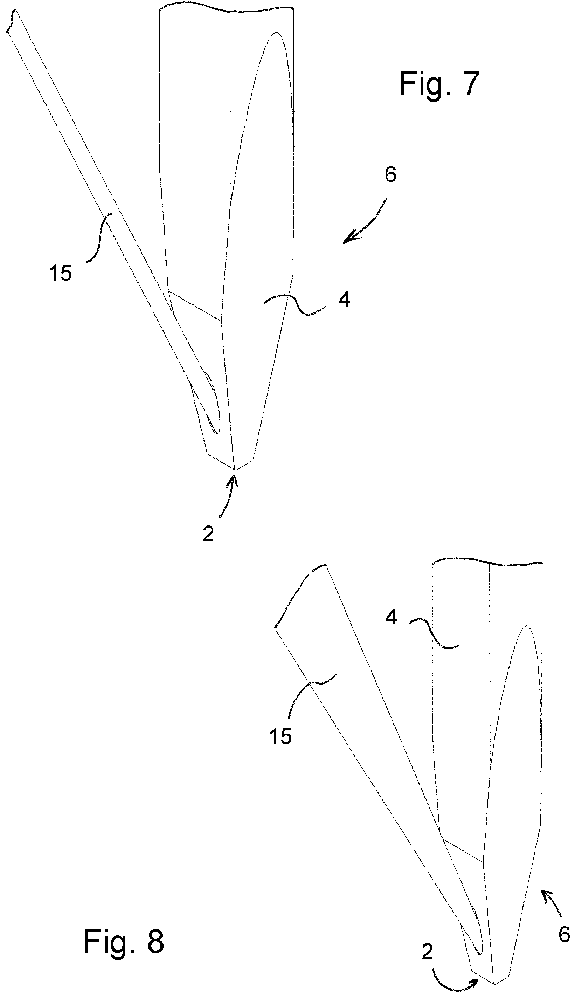

Soweit in Fig. 4 und 5 der Laserstrahl 15 divergent ist, ist dies lediglich exemplarisch. In Fig. 7 wird das Ultraschallwerkzeug 1 nach den Fig. 1 bis 3 mit einem kollimierten Laserstrahl 15 bestrahlt. In der Fig. 8 ist der Laserstrahl 15 konvergent geformt.

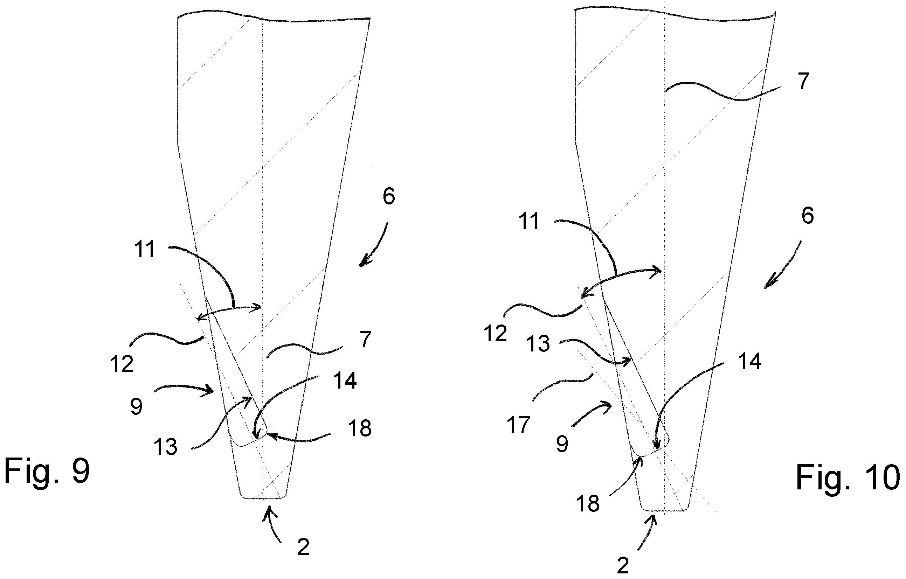

Fig. 9 zeigt eine Schnittdarstellung des Endbereichs 6 des Ultraschallwerkzeugs 1 nach den Fig. 1 bis 3 mit der Ausnehmung 9. In der vergrößerten Darstellung wird hierbei deutlich, dass zwischen der Ausnehmungsmantelfläche 13 und dem Ausnehmungsgrund 14 eine verrundete Übergangsfläche 18 gebildet ist. Die gegenübergestellte Fig. 10 zeigt zusätzlich die zu der Längsmittelachse 12 geneigte Einfallsachse 17 des Laserstrahls 15.

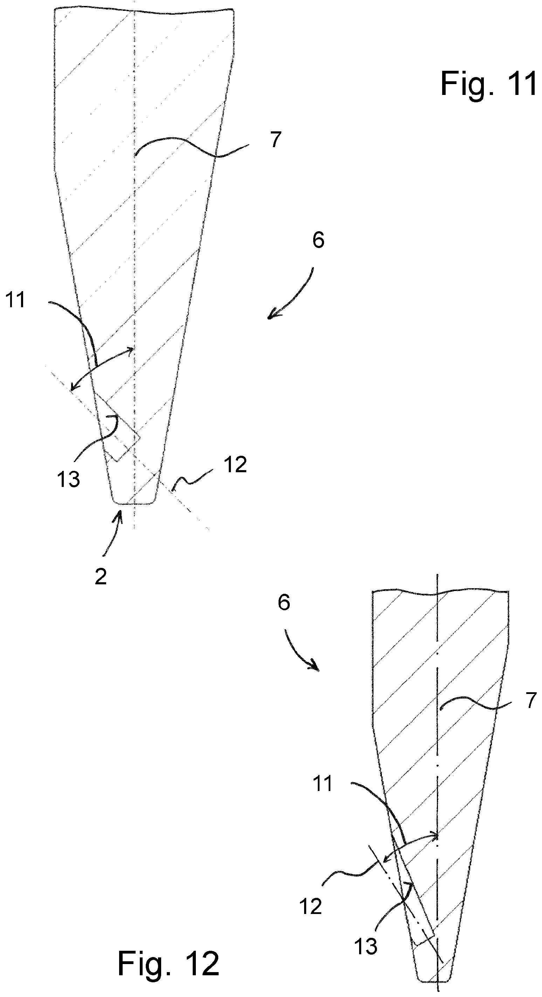

Eine zweite Ausführungsform des Ultraschallwerkzeugs 1 nach der Fig. 11 sieht eine in Bezug auf den spitzen Winkel 11 stärker geneigte Ausnehmung 9 vor. Die Ausnehmung 9 ist wie gehabt mit einer zylindrischen Ausnehmungsmantelfläche 13 und einem ebenen, senkrecht zu der Längsmittelachse 12 der Ausnehmung 9 orientierten Ausnehmungsgrund 14 ausgestattet. Auf die Realisierung einer Übergangsfläche 18 zwischen der Ausnehmungsmantelfläche 13 und dem Ausnehmungsgrund 14 ist vorliegend verzichtet.

Nach einer dritten Ausführungsform des Ultraschallwerkzeugs 1 gemäß Fig. 12 ist die Ausnehmungsmantelfläche 13 der Ausnehmung 9 kegelstumpfförmig gebildet, wobei sich die Ausnehmung 9 in Richtung des Ausnehmungsgrunds 14 verjüngt.

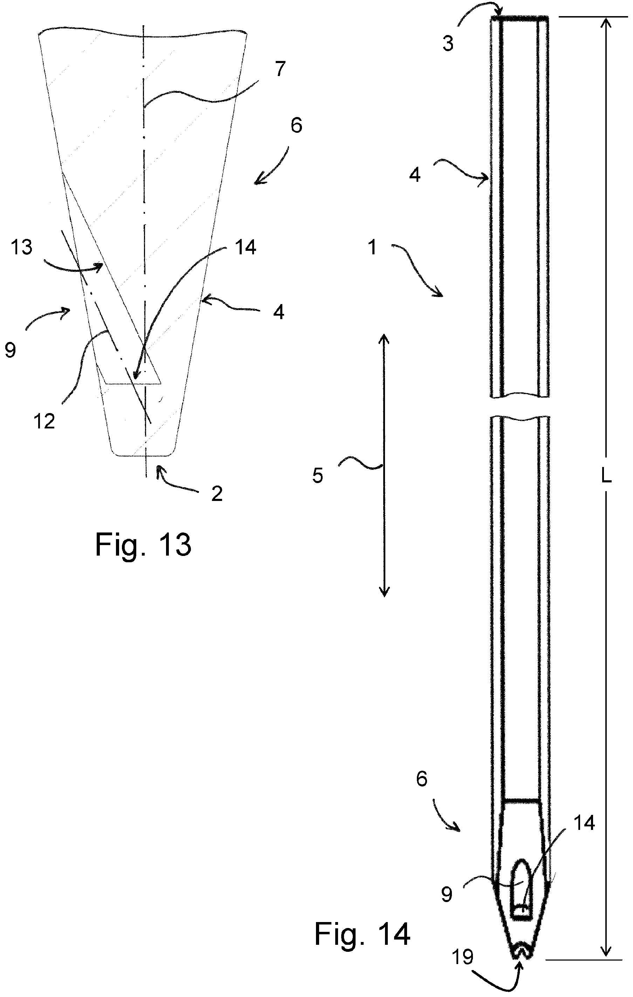

Nach einer vierten Ausführungsform sieht das Ultraschallwerkzeug 1 gemäß Fig. 13 eine Ausnehmung 9 mit einer zylindrischen Ausnehmungsmantelfläche 13 und einem ebenen Ausnehmungsgrund 14 vor. Der Ausnehmungsgrund 14 ist jedoch parallel zu der Verbindungskontaktfläche 2 beziehungsweise senkrecht zur Werkzeuglängsmittelachse 7 und demzufolge geneigt zur Längsmittelachse 12 der Ausnehmung 9 orientiert.

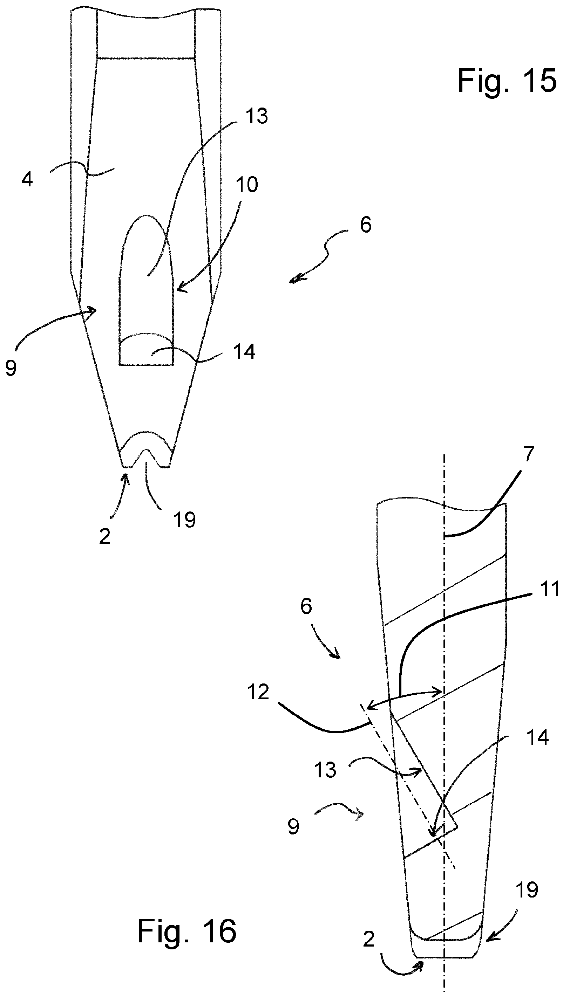

Nach einer fünften Ausführungsform der Erfindung gemäß der Fig. 14 bis 17 sieht das Ultraschallwerkzeug 1 eine Verbindungskontaktseite 2 mit einer V-förmigen Anlegekontur 19 vor. Die Anlegekontur 19 erstreckt sich quer zur Werkzeuglängsrichtung 5 in der Längsmittelebene 8 des Ultraschallwerkzeugs 1. Die V-förmige Aufnahmekontur 19 dient insbesondere der Aufnahme eines Bonddrahts beim Ultraschall-Drahtbonden.

Die Ausnehmung 9, welche das Ultraschallwerkzeug 1 im Endbereich 6 vorsieht, ist taschenartig dahingehend ausgebildet, dass der Ausnehmungsgrund 14 sich bis zu der Werkzeugmantelfläche 4 erstreckt. Die Begrenzungskontur 10 der Ausnehmung 9 wird insofern von der abschnittsweise halbzylinderartig und abschnittsweise eben geformten Ausnehmungsmantelfläche 13 sowie dem Ausnehmungsgrund 14 definiert. Bezogen auf eine Längsmittelachse 12 der Ausnehmung 9, welche den halbzylinderartigen Bereich der Ausnehmungsmantelfläche 13 in Bezug nimmt, ist die Ausnehmung 9 unter dem spitzen Winkel 11 zur Werkzeuglängsmittelachse 7 orientiert.

Der Laserstrahl 15 trifft vollständig oder vorwiegend im Bereich des Ausnehmungsgrunds 14 auf das Ultraschallwerkzeug 1. Insbesondere kann vorgesehen sein, dass die Einfallachse 17 des Laserstrahls 15 geneigt zur Längsmittelachse 12 der Ausnehmung beziehungsweise schräg zum Ausnehmungsgrund 14 orientiert ist.

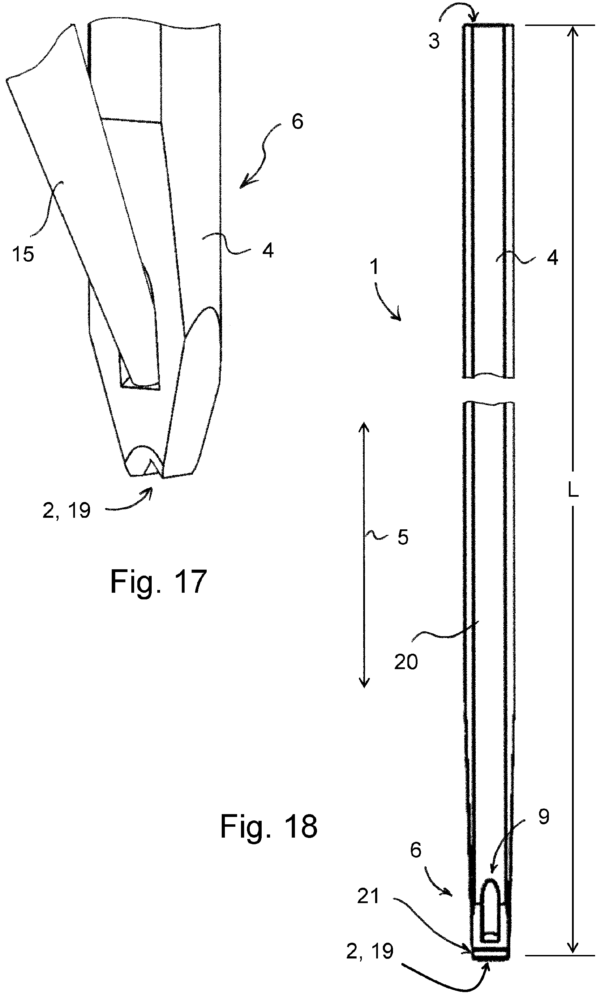

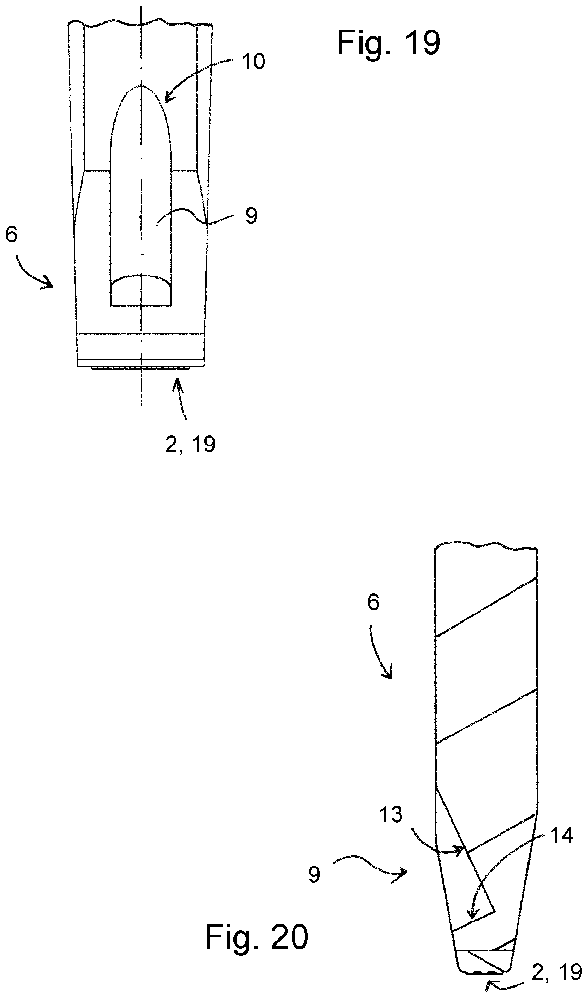

Nach einer sechsten Ausführungsform der Erfindung gemäß der Fig. 18 bis 21 ist das Ultraschallwerkzeug 1 zweiteilig ausgebildet. In dem Endbereich 6 sieht das Ultraschallwerkzeug 1 wie gehabt die Ausnehmung 9 vor, welche in Bezug auf ihre Geometrie der Ausnehmung 9 des Ultraschallwerkzeugs 1 nach dem fünften Ausführungsbeispiel der Erfindung entspricht. Wie gehabt ist der Ausnehmungsgrund 14 der Verbindungskontaktfläche 2 des Ultraschallwerkzeugs 1 zugewandt.

Die Verbindungskonturfläche 2 ist mit einer kissenförmigen Anlagekontur 19 versehen. Während die Ausnehmung 9 in dem Endbereich 6 an einem in die Werkzeuglängsrichtung 5 langgestreckten Schaft des Ultraschallwerkzeugs 1 ausgebildet ist, ist die Verbindungskonturfläche 2 mit der kissenartigen Anlagekontur 19 durch ein an den Schaft 20 angebautes und mit diesem verklebtes beziehungsweise hartgelötetes beziehungsweise mechanisch verbundenes Kontaktkissen 21 gebildet.

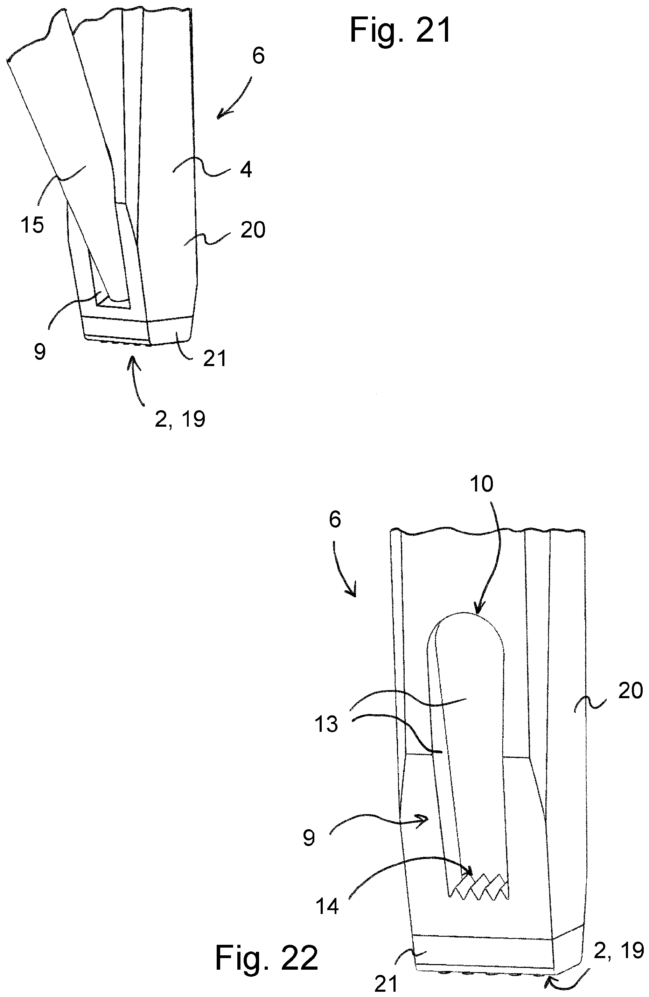

Fig. 21 zeigt, wie der konvergent geformte Laserstrahl 15 in die Ausnehmung 9 des Ultraschallwerkzeugs 1 eintritt und in der Ausnehmung 9 bevorzugt auf den Ausnehmungsgrund 14 trifft.

Die Fig. 22 bis 25 zeigen eine siebte, eine achte, eine neunte und eine zehnte Ausführungsform des erfindungsgemäßen Ultraschallwerkzeugs 1. Die Ultraschallwerkzeuge 1 gemäß der Fig. 22 bis 25 unterscheiden sich insbesondere in Bezug auf die Geometrie beziehungsweise Gestaltung des Ausnehmungsgrunds 14 der Ausnehmung 9.

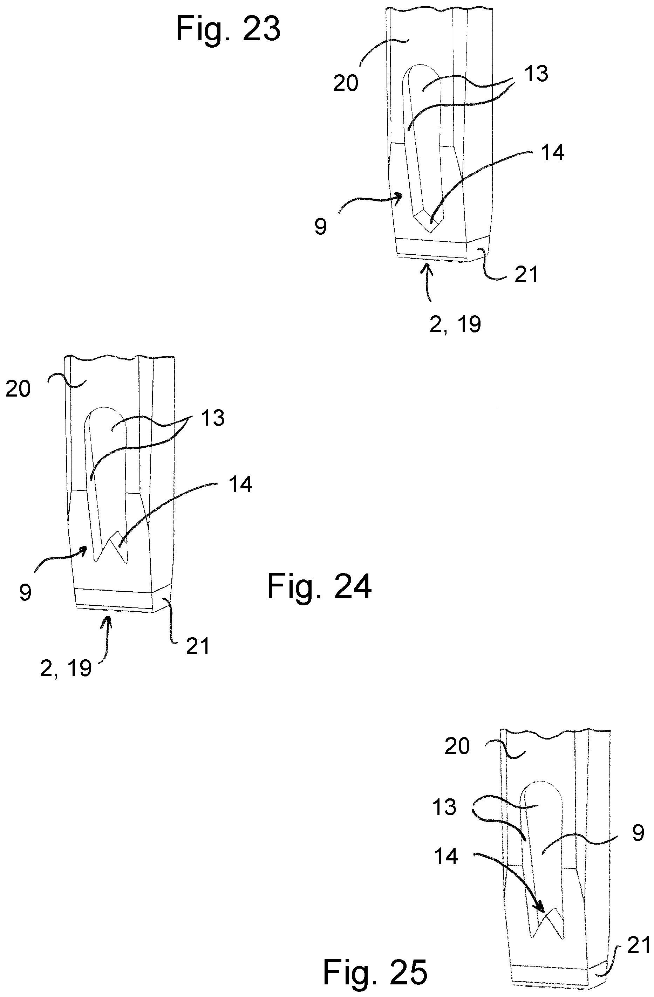

In Fig. 22 ist das siebte Ausführungsbeispiel der Erfindung mit einem mehrfach gezackten Ausnehmungsgrund 14 realisiert. Nach einer achten Ausführungsform der Erfindung gemäß Fig. 23 sieht das Ultraschallwerkzeug eine Ausnehmung 9 vor, welche einen sich in Richtung der Verbindungskonturfläche 2 keilförmig zulaufenden beziehungsweise sich trichterförmig verjüngenden Ausnehmungsgrund 14 aufweist. Nach den Fig. 24 und 25 ist der Ausnehmungsgrund 14 einfach gezackt. Die Zacken sind jeweils so orientiert, dass ein im Bereich der Zackenflanken auf den Ausnehmungsgrund 14 treffender Laserstrahl 15 seitlich in Richtung der Ausnehmungsmantelfläche 13 umgelenkt wird. Die Ausnehmung 9 nach dem neunten Ausführungsbeispiel der Erfindung (Fig. 24) und dem zehnten Ausführungsbeispiel der Erfindung (Fig. 25) unterscheiden sich darin, dass die Spitze des Ausnehmungsgrunds in Fig. 24 scharfkantig gebildet, während sie in Fig. 25 abgerundet beziehungsweise verrundet ausgebildet ist.

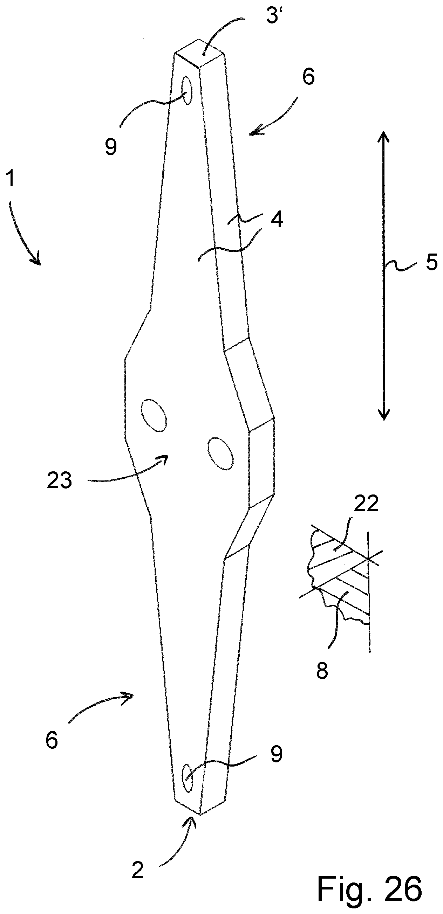

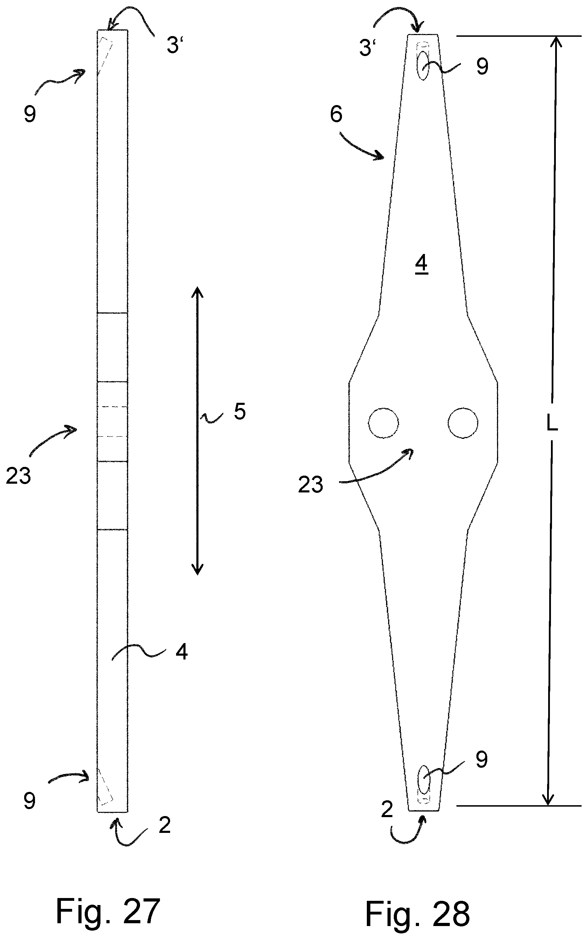

Nach einer elften Ausführungsform der Erfindung gemäß der Fig. 26 bis 28 ist das Ultraschallwerkzeug 1 symmetrisch bezüglich der Längsmittelebene 8 und zusätzlich symmetrisch bezüglich einer Quermittelebene 22 gebildet. Es handelt sich insofern um ein Wendewerkzeug mit einer zentralen Aufnahme 23, bei dem die erste Stirnseite 2 und zusätzlich auch die der ersten Stirnseite 2 gegenüberliegende zweite Stirnseite 3' als Verbindungskontaktflächen 2, 3' ausgebildet sind.

Jeweils verjüngt sich das Ultraschallwerkzeug 1 in Richtung der Verbindungskontaktflächen 2, 3' und formt so an den einander gegenüberliegenden Seiten zwei freie Endbereiche 6 mit jeweils einer Ausnehmung 9. Die Ausnehmungen 9 sind unter einem spitzen Winkel zur Werkzeuglängsrichtung 5 so geneigt angeordnet, dass der Ausnehmungsgrund 14 jeweils der benachbarten Verbindungskontaktfläche 2, 3' zugewandt ist.

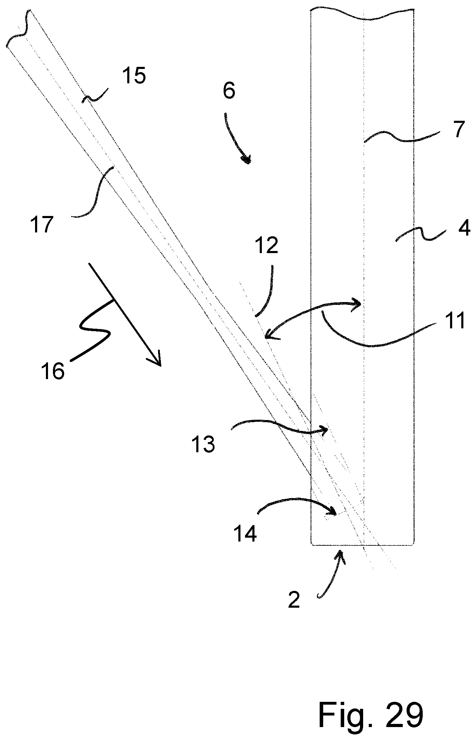

Die Ausnehmungsmantelfläche 13 jeder Ausnehmung 9 ist wie in dem ersten Ausführungsbeispiel der Erfindung zylindrisch realisiert und der Ausnehmungsgrund 14 eben und senkrecht zu der Längsmittelachse 12 der Ausnehmung 9 orientiert. Fig. 29 zeigt, dass der divergente Laserstrahl 15 beim Betrieb des Lasergenerators beziehungsweise der Ultraschallverbindungsanordnung auf die Ausnehmung 9 gerichtet ist und zum überwiegenden Teil auf den Ausnehmungsgrund 14 trifft. Die Einfallachse 17 des Laserstrahls 15 ist dabei geneigt zur Längsmittelachse 12 der Ausnehmung 9 orientiert. Insofern trifft der Laserstrahl 15 schräg auf den ebenen Ausnehmungsgrund 14.

Die Geometrie der verschiedenen Ausnehmungen 9 ist jeweils exemplarisch gewählt. Die Ausnehmungsgeometrie ist nicht auf die gezeigten Ausführungsformen beschränkt. Es ist insbesondere nicht erforderlich, dass ein scharfkantiger Übergang von der Ausnehmungsmantelfläche 13 zum Ausnehmungsgrund 14 gebildet ist und dass die Ausnehmung 9 eine regelmäßige beziehungsweise symmetrische Form aufweist. Beispielsweise kann die Ausnehmung 9 halbschalenartig beziehungsweise tropfenförmig gebildet sein oder durch eine Freiformfläche begrenzt sein.

Gleiche Bauteile und Bauteilfunktionen sind durch gleiche Bezugszeichen gekennzeichnet.

## Patentansprüche

1. Ultraschallwerkzeug (1) umfassend eine erste Stirnseite (2) und eine der ersten Stirnseite (2) gegenüberliegende zweite Stirnseite (3, 3') sowie eine die erste Stirnseite (2) und die zweite Stirnseite (3, 3') verbindende Werkzeugmantelfläche (4), wobei das Ultraschallwerkzeug (1) in eine Werkzeuglängsrichtung (5) langgestreckt ausgebildet ist, wobei wenigstens die erste Stirnseite (2) als eine Verbindungskontaktfläche (2, 3') ausgebildet ist, welche eingerichtet ist zum Andrücken des Ultraschallwerkzeugs (1) an ein Verbindungsbauteil, und wobei das Ultraschallwerkzeug (1) einen die Verbindungskontaktfläche (2, 3') aufweisenden Endbereich (6) aufweist, der sich von der Verbindungskontaktfläche (2, 3') in die Werkzeuglängsrichtung (5) über 15 mm, maximal jedoch ein Drittel einer Länge (L) des Ultraschallwerkzeugs (1) in Richtung der gegenüberliegenden Stirnseite (2, 3, 3') erstreckt, **dadurch gekennzeichnet, dass** in dem Endbereich (6) an der Werkzeugmantelfläche (4) eine taschenförmige und/oder sacklochartige Ausnehmung (9) mit einer Ausnehmungsmantelfläche (13) und einem der Verbindungskontaktfläche (2, 3') zugewandten Ausnehmungsgrund (14) ausgebildet ist.

2. Ultraschallwerkzeug (1) nach Anspruch 1, **dadurch gekennzeichnet, dass** sich die Ausnehmung (9) von der Werkzeugmantelfläche (4) in Richtung der Verbindungskontaktfläche (2, 3') erstreckt und/oder dass sich das Ultraschallwerkzeug (1) in dem Endbereich (6) bezogen auf einen senkrecht zu der Werkzeuglängsrichtung (5) orientierten Querschnitt wenigstens abschnittsweise zu der Verbindungskontaktfläche (2, 3') hin verjüngt.

3. Ultraschallwerkzeug (1) nach Anspruch 1 oder 2, **dadurch gekennzeichnet, dass** eine zu der Werkzeugmantelfläche (4) hin gebildete Begrenzungskontur (10) der Ausnehmung (9) wenigstens abschnittsweise kreisbogenartig und/oder wenigstens abschnittsweise elliptisch und/oder wenigstens abschnittsweise parabelartig und/oder wenigstens abschnittsweise hyperbolisch geformt ist.

4. Ultraschallwerkzeug (1) nach einem der Ansprüche 1 bis 3, **dadurch gekennzeichnet, dass** die Ausnehmungsmantelfläche (13) der Ausnehmung (9) wenigstens abschnittsweise zylindrisch und/oder kegelstumpfartig geformt ist.

5. Ultraschallwerkzeug (1) nach einem der Ansprüche 1 bis 4, **dadurch gekennzeichnet, dass** die Ausnehmung (9) bezogen auf eine Längsmittelachse (12) derselben wenigstens abschnittsweise symmetrisch ausgebildet ist und/oder wenigstens abschnittsweise eine in Bezug auf eine Größe und/oder Form gleiche Querschnittskontur aufweist.

6. Ultraschallwerkzeug (1) nach Anspruch 5, **dadurch gekennzeichnet, dass** die Längsmittelachse (12) der Ausnehmung (9) und die Werkzeuglängsrichtung (5) einen spitzen Winkel (11) einschließen und/oder dass der spitze Winkel (11) im Bereich von 15° bis 50° liegt.

7. Ultraschallwerkzeug (1) nach einem der Ansprüche 1 bis 6, **dadurch gekennzeichnet, dass** der Ausnehmungsgrund (14) und/oder die Ausnehmungsmantelfläche (13) der Ausnehmung (9) eine einen Laserstrahl (15) diffus reflektierende Oberfläche aufweist und/oder dass die Oberfläche des Ausnehmungsgrunds (14) senkrecht zu der Längsmittelachse (12) der Ausnehmung (9) oder der Werkzeuglängsrichtung (5) orientiert ist und/oder dass die Oberfläche des Ausnehmungsgrunds (14) nicht senkrecht zu der Längsmittelachse (12) des Ausnehmung (9) orientiert ist und/oder dass an dem Ausnehmungsgrund (14) die Oberfläche derart geneigt zur der Längsmittelachse (12) der Ausnehmung (9) orientiert und/oder derart gewölbt ausgeformt ist, dass der in die Ausnehmung (9) einfallende Laserstrahl (15) in Richtung der Ausnehmungsmantelfläche (13) reflektiert wird.

8. Ultraschallwerkzeug (1) nach einem der Ansprüche 1 bis 7, **dadurch gekennzeichnet, dass** zwischen der Ausnehmungsmantelfläche (13) und dem Ausnehmungsgrund (14) eine verrundete Übergangsfläche (18) ausgebildet ist.

9. Ultraschallwerkzeug (1) nach einem der Ansprüche 1 bis 8, **dadurch gekennzeichnet, dass** die Ausnehmung (9) symmetrisch zu einer die Werkzeuglängsrichtung (5) aufnehmenden Werkzeuglängsmittelebene (8) orientiert ist und/oder dass die Werkzeuglängsmittelebene (8) als eine Symmetrieebene des Ultraschallwerkzeug (1) ausgebildet ist und/oder dass das Ultraschallwerkzeug (1) bezogen auf eine senkrecht zu der Werkzeuglängsrichtung (5) und/oder der Werkzeuglängsmittelebene (8) orientierten Quermittelebene (22) symmetrisch ausgebildet ist, wobei auch die zweite Stirnseite (3') als Verbindungskontaktfläche (3') ausgebildet ist.

10. Ultraschallwerkzeug (1) nach einem der Ansprüche 1 bis 9, **dadurch gekennzeichnet, dass** die Ausnehmung (9) durch Senkerodieren und/oder durch additive Fertigungsverfahren und/oder durch Laserablation und/oder urformend und/oder spanend hergestellt ist und/oder dass an der wenigstens einen Verbindungskontaktfläche (2, 3') eine Anlagekontur (19) vorgesehen ist.

11. Ultraschallwerkzeug (1) nach einem der Ansprüche 1 bis 10, **dadurch gekennzeichnet, dass** das Ultraschallwerkzeug (1) aus einem Hartmetall oder einer Keramik oder Stahl und bevorzugt aus einem Wolframcarbid-basierten Hartmetall oder Bornitrid besteht und/oder besonders bevorzugt Wolframcarbid in einer Kobaltmatrix aufweist.

12. Ultraschallverbindungsvorrichtung zum Ultraschallschweißen und/oder Ultraschallbonden umfassend
- ein Ultraschallwerkzeug (1) nach einem der Ansprüche 1 bis 11 mit wenigstens einer an der Werkzeugmantelfläche (4) gebildeten Ausnehmung (9),
- einen Ultraschallgenerator und einen Transducer, wobei der Ultraschallgenerator den Transducer derart zu Schwingungen anregt und der Transducer mit dem Ultraschallwerkzeug (1) derart zusammenwirkt, dass das Ultraschallwerkzeug (1) zu Ultraschallschwingungen und bevorzugt zu Ultraschallbiegeschwingungen anregbar ist,
- einen Lasergenerator zum Bereitstellen eines Laserstrahls (15),
wobei der Laserstrahl (15) so auf die an dem Ultraschallwerkzeug (1) gebildete Ausnehmung (9) ausgerichtet ist, dass der Laserstrahl (15) bevorzugt vollständig oder vorwiegend innerhalb der Ausnehmung (9) auf das Ultraschallwerkzeug (1) trifft und dass der Laserstrahl (15) besonders bevorzugt auf den der Verbindungskontaktfläche (2, 3') zugewandten Ausnehmungsgrund (14) der Ausnehmung (9) trifft.

13. Ultraschallverbindungsvorrichtung nach Anspruch 12, **dadurch gekennzeichnet, dass** eine Einfallachse (17) des Laserstrahls (15) geneigt zu der Längsmittelachse (12) der Ausnehmung (9) orientiert ist.

14. Ultraschallverbindungsvorrichtung nach Anspruch 12 oder 13, **dadurch gekennzeichnet, dass** der Laserstrahl (15) unter einem von 90° abweichenden Winkel auf den Ausnehmungsgrund (14) trifft.

15. Ultraschallverbindungsvorrichtung nach einem der Ansprüche 12 bis 14, **dadurch gekennzeichnet, dass** eine Wellenlänge des Laserstrahls (15) so auf ein Material des Ultraschallwerkzeugs (1) und/oder eine Geometrie und/oder Oberflächenbeschaffenheit der Ausnehmungsmantelfläche (13) und/oder des Ausnehmungsgrunds (14) abgestimmt ist, dass ein Absorptionsgrad von mindestens 0,3 und bevorzugt von 0,5 oder mehr erreicht ist.

## Claims

1. An ultrasonic tool (1) comprising a first end face (2) and a second end face (3, 3') opposite the first end face (2) and a tool circumferential area (4) connecting the first end face (2) and the second end face (3, 3'), wherein the ultrasonic tool (1) is formed elongated in a tool longitudinal direction (5), wherein at least the first end face (2) is formed as a connection contact area (2, 3') which is arranged for pressing the ultrasonic tool (1) against a connection component, and wherein the ultrasonic tool (1) has an end region (6) having the connection contact area (2, 3'), which end region extends from the connection contact area (2, 3') in the tool longitudinal direction (5) over 15 mm, but at most one third of a length (L) of the ultrasonic tool (1) in the direction of the opposite end face (2, 3, 3'), **characterized in that** in the end region (6) on the tool circumferential area (4) there is formed a pocket-shaped and/or blind-hole-like recess (9) having a recess circumferential area (13) and a recess base (14) facing the connection contact area (2, 3').

2. The ultrasonic tool (1) according to claim 1, **characterized in that** the recess (9) extends from the tool circumferential area (4) in the direction of the connection contact area (2, 3') and/or **in that** the ultrasonic tool (1) tapers in the end region (6) with respect to a cross-section oriented perpendicularly to the tool longitudinal direction (5) at least in sections towards the connection contact area (2, 3').

3. The ultrasonic tool (1) according to claim 1 or 2, **characterized in that** a boundary contour (10), formed towards the tool circumferential area (4), of the recess (9) is shaped at least in sections in a circular-arc-like manner and/or at least in sections elliptically and/or at least in sections parabolically and/or at least in sections hyperbolically.

4. The ultrasonic tool (1) according to any of claims 1 to 3, **characterized in that** the recess circumferential area (13) of the recess (9) is shaped at least in sections cylindrically and/or frustoconically.

5. The ultrasonic tool (1) according to any of claims 1 to 4, **characterized in that** the recess (9) is formed at least in sections symmetrically with respect to a longitudinal center axis (12) thereof and/or has at least in sections a cross-sectional contour identical with respect to a size and/or shape.

6. The ultrasonic tool (1) according to claim 5, **characterized in that** the longitudinal center axis (12) of the recess (9) and the tool longitudinal direction (5) enclose an acute angle (11) and/or **in that** the acute angle (11) lies in the range from 15° to 50°.

7. The ultrasonic tool (1) according to any of claims 1 to 6, **characterized in that** the recess base (14) and/or the recess circumferential area (13) of the recess (9) has a surface diffusely reflecting a laser beam (15) and/or **in that** the surface of the recess base (14) is oriented perpendicularly to the longitudinal center axis (12) of the recess (9) or the tool longitudinal direction (5) and/or **in that** the surface of the recess base (14) is not oriented perpendicularly to the longitudinal center axis (12) of the recess (9) and/or **in that** the surface at the recess base (14) is oriented inclined to the longitudinal center axis (12) of the recess (9) and/or is formed curved such that the laser beam (15) incident in the recess (9) is reflected in the direction of the recess circumferential area (13).

8. The ultrasonic tool (1) according to any of claims 1 to 7, **characterized in that** a rounded transition area (18) is formed between the recess circumferential area (13) and the recess base (14).

9. The ultrasonic tool (1) according to any of claims 1 to 8, **characterized in that** the recess (9) is oriented symmetrically to a tool longitudinal center plane (8) receiving the tool longitudinal direction (5) and/or **in that** the tool longitudinal center plane (8) is formed as a symmetry plane of the ultrasonic tool (1) and/or in that the ultrasonic tool (1) is formed symmetrically with respect to a transverse center plane (22) oriented perpendicularly to the tool longitudinal direction (5) and/or the tool longitudinal center plane (8), the second end face (3') also being formed as a connection contact area (3').

10. The ultrasonic tool (1) according to any of claims 1 to 9, **characterized in that** the recess (9) is produced by sink erosion and/or by additive manufacturing methods and/or by laser ablation and/or by primary forming and/or by machining and/or **in that** a contact contour (19) is provided on the at least one connection contact area (2, 3').

11. The ultrasonic tool (1) according to any of claims 1 to 10, **characterized in that** the ultrasonic tool (1) consists of a hard metal or a ceramic or steel and preferably of a tungsten carbide-based hard metal or boron nitride and/or particularly preferably has tungsten carbide in a cobalt matrix.

12. An ultrasonic connection device for ultrasonic welding and/or ultrasonic bonding comprising
- an ultrasonic tool (1) according to any of claims 1 to 11 with at least one recess (9) formed on the tool circumferential area (4),
- an ultrasonic generator and a transducer, wherein the ultrasonic generator excites the transducer to vibrations in such a way and the transducer interacts with the ultrasonic tool (1) in such a way that the ultrasonic tool (1) can be excited to ultrasonic vibrations and preferably to ultrasonic bending vibrations,
- a laser generator for providing a laser beam (15),
wherein the laser beam (15) is aligned to the recess (9) formed on the ultrasonic tool (1) such that the laser beam (15) impinges on the ultrasonic tool (1) preferably completely or predominantly within the recess (9) and that the laser beam (15) impinges particularly preferably on the recess base (14) of the recess (9), which faces the connection contact area (2, 3').

13. The ultrasonic connection device according to claim 12, **characterized in that** an axis of incidence (17) of the laser beam (15) is oriented inclined to the longitudinal center axis (12) of the recess (9).

14. The ultrasonic connection device according to claim 12 or 13, **characterized in that** the laser beam (15) impinges on the recess base (14) at an angle deviating from 90°.

15. The ultrasonic connection device according to any of claims 12 to 14, **characterized in that** a wavelength of the laser beam (15) is adjusted to a material of the ultrasonic tool (1) and/or a geometry and/or surface quality of the recess circumferential area (13) and/or of the recess base (14) such that a degree of absorption of at least 0.3 and preferably of 0.5 or more is achieved.

## Revendications

1. Outil à ultrasons (1) comprenant une première face frontale (2) et une deuxième face frontale (3, 3') opposée à la première face frontale (2) ainsi qu'une surface extérieure (4) de l'outil reliant la première face frontale (2) et la deuxième face frontale (3, 3'), l'outil à ultrasons (1) étant de conformation allongée dans le sens longitudinal (5) de l'outil, la première face frontale (2) au moins étant réalisée comme surface de contact de liaison (2, 3'), laquelle est conçue pour presser l'outil à ultrasons (1) contre une pièce de liaison et l'outil à ultrasons (1) présentant une section d'extrémité (6) comprenant la surface de contact de liaison (2, 3') et s'étendant depuis la surface de contact de liaison (2, 3') dans le sens longitudinal (5) de l'outil sur une longueur de 15 mm, au maximum cependant sur un tiers d'une longueur (L) de l'outil à ultrasons (1) en direction de la face frontale opposée (2, 3, 3'), **caractérisé en ce que** dans la section d'extrémité (6) est façonné sur la surface extérieure (4) de l'outil, un évidement (9) en forme de poche ou de trou borgne avec une surface latérale (13) et un fond (14) orienté vers la surface de contact de liaison (2, 3').

2. Outil à ultrasons (1) selon la revendication 1, **caractérisé en ce que** l'évidement (9) s'étend de la surface extérieure (4) de l'outil en direction de la surface de contact de liaison (2, 3') et/ou **en ce que** l'outil à ultrasons (1) s'amincit partiellement au moins en direction de la surface de contact de liaison (2, 3') par rapport à une section d'orientation perpendiculaire au sens longitudinal (5) de l'outil.

3. Outil à ultrasons selon la revendication 1 ou 2, **caractérisé en ce qu'**un contour de délimitation (10) de l'évidement (9) dans la surface extérieure (4) de l'outil est partiellement au moins en forme d'arc de cercle et/ou partiellement au moins en forme d'ellipse et/ou partiellement au moins en forme de parabole et/ou partiellement au moins en forme d'hyperbole.

4. Outil à ultrasons (1) selon l'une des revendications 1 à 3, **caractérisé en ce que** la surface latérale (13) de l'évidement (9) est, partiellement au moins, de forme cylindrique et/ou tronconique.

5. Outil à ultrasons (1) selon l'une des revendications 1 à 4, **caractérisé en ce que** l'évidement (9) est partiellement au moins de forme symétrique par rapport à un axe longitudinal médian (12) de cet évidement et/ou **en ce que** sa section transversale présente un contour partiellement au moins de même grandeur et/ou forme.

6. Outil à ultrasons (1) selon la revendication 5, **caractérisé en ce que** l'axe longitudinal médian (12) de l'évidement (9) et le sens longitudinal (5) de l'outil forment un angle aigu (11) et/ou **en ce que** la valeur de l'angle aigu (11) est comprise entre 15° et 50°.

7. Outil à ultrasons (1) selon l'une des revendications 1 à 6, **caractérisé en ce que** le fond (14) de l'évidement et/ou la surface latérale (13) de l'évidement (9) présente une surface réfléchissant de façon diffuse un rayon laser (15) et/ou **en ce que** la surface du fond (14) de l'évidement est d'orientation perpendiculaire à l'axe longitudinal médian (12) de l'évidement (9) et/ou au sens longitudinal (5) de l'outil et/ou **en ce que** la surface du fond (14) de l'évidement n'est pas d'orientation perpendiculaire à l'axe longitudinal médian (12) de l'évidement (9) et/ou **en ce que** la surface du fond (14) de l'évidement est d'orientation inclinée par rapport à l'axe longitudinal médian (12) de l'évidement (9) et/ou de forme courbée de façon à ce qu'un rayon laser (15) incident dans l'évidement (9) soit réfléchi en direction de la surface latérale (13) de l'évidement.

8. Outil à ultrasons (1) selon l'une des revendications 1 à 7, **caractérisé en ce qu'**une surface de transition (18) arrondie est formée entre la surface latérale (13) et le fond (14) de l'évidement.

9. Outil à ultrasons (1) selon l'une des revendications 1 à 8, **caractérisé en ce que** l'évidement (9) est orienté symétriquement par rapport à un plan médian longitudinal (8) de l'outil comprenant le sens longitudinal (5) de l'outil, et/ou **en ce que** le plan médian longitudinal (8) de l'outil forme un plan de symétrie de l'outil à ultrasons (1), et/ou **en ce que** l'outil à ultrasons (1) est de conformation symétrique par rapport à un plan médian transversal (22) d'orientation perpendiculaire au sens longitudinal (5) de l'outil et/ou au plan médian longitudinal (8) de l'outil, la deuxième face frontale (3') étant également réalisée comme surface de contact de liaison (3').

10. Outil à ultrasons (1) selon l'une des revendications 1 à 9, **caractérisé en ce que** l'évidement (9) est réalisé par électroérosion par enfonçage et/ou par procédés de fabrication additive et/ou par ablation par laser et/ou par formage primaire et/ou par enlèvement de copeaux et/ou **en ce qu'**un contour de contact (19) est prévu sur la (les) surface(s) de contact de liaison (2, 3').

11. Outil à ultrasons (1) selon l'une des revendications 1 à 10, **caractérisé en ce que** l'outil à ultrasons (1) est constitué d'un métal dur ou de céramique ou d'acier et de préférence d'un métal dur à base de carbure de tungstène ou de nitrure de bore et/ou, de préférence particulière, présente du carbure de tungstène dans une matrice de cobalt.

12. Dispositif de liaison par ultrasons pour soudage par ultrasons et/ou liaison par ultrasons comprenant
- un outil à ultrasons (1) selon l'une des revendications 1 à 11 avec au moins un évidement (9) formé sur la surface extérieure (4) de l'outil,
- un générateur d'ultrasons et un transducteur, le générateur d'ultrasons mettant le transducteur en oscillation et le transducteur interagissant avec l'outil à ultrasons (1) de façon telle que l'outil à ultrasons (1) puisse être mis en oscillations ultrasonores et, de préférence, en vibrations ultrasonores de flexion,
- un générateur laser pour la mise à disposition d'un rayon laser (15),
le rayon laser (15) étant dirigé sur l'évidement (9) formé sur l'outil à ultrasons (1) de façon à ce que le rayon laser (15) touche l'outil à ultrasons (1) de préférence en totalité ou principalement à l'intérieur de l'évidement (9) et, de préférence particulière, de façon à ce que le rayon laser (15) touche le fond (14) de l'évidement (9) tourné vers la surface de contact de liaison (2, 3').

13. Dispositif de liaison par ultrasons selon la revendication 12, **caractérisé en ce qu'**un axe d'incidence (17) du rayon laser (15) soit d'orientation inclinée par rapport à l'axe longitudinal médian (12) de l'évidement (9).

14. Dispositif de liaison par ultrasons selon la revendication 12 ou 13, **caractérisé en ce que** le rayon laser (15) touche le fond (14) de l'évidement sous un angle différent de 90°.

15. Dispositif de liaison par ultrasons selon l'une des revendications 12 à 14, **caractérisé en ce qu'**une longueur d'onde du rayon laser (15) est adaptée au matériau de l'outil à ultrasons (1) et/ou à une géométrie et/ou texture de la surface latérale (13) de l'évidement et/ou du fond (14) de l'évidement de façon à atteindre un degré d'absorption d'au moins 0,3 et, de préférence, de 0,5 ou plus.
